# EUROPEAN PATENT SPECIFICATION

(11) **EP 2 461 899 B1**
(45) Date of publication and mention of the grant of the patent: **16.11.2016**
(21) Application number: 10737382.1
(22) Date of filing: 23.07.2010
(51) Int. Cl.: B01F 17/34, C10L 1/32, B01F 17/22

(54) **COMPOSITION FOR PREPARING AN EMULSION**
ZUSAMMENSETZUNG ZUR HERSTELLUNG EINER EMULSION
COMPOSITION POUR LA PRÉPARATION D UNE ÉMULSION

(30) Priority: 05.08.2009 GB 0913644
(43) Date of publication of application: 13.06.2012
(73) Proprietor: PALOX offshore S.A.L., Beit-Mery (LB)
(72) Inventor: MARTIN, David, Merseyside L30 6YF (GB)
(74) Representative: McLean, Craig Sutherland
(86) International application number: PCT/GB2010/051215
(87) International publication number: WO 2011/015844

(56) References cited:
- GB-A- 2 352 246
- US-A1- 2003 134 755

## Description

The present invention relates to a composition for preparing an emulsion. In particular, the present invention relates to a composition for preparing a water-in-oil emulsion comprising 0.1 to 40 wt% water, wherein the average droplet size of the water phase is no greater than 0.1 µm. More particularly, though not exclusively, the invention relates to water-in-fuel emulsions and their high and low temperature stability.

Oils: oil is defined as being derived from hydrocarbon feedstocks. These fluids can be paraffinic, naphthenic, synthetic or mixtures thereof and are suitable for use as lubricants amongst many other applications. Commercially available products such as hydraulic oils, gear oils etc may be used to form the emulsions also.

Fuels: The terms "liquid fuel" and "oil" are herein used as substantially equivalent generic terms for liquids such as diesel; kerosene; gasoline/petrol (leaded or unleaded); paraffinic, naphthenic, heavy fuel oils, biofuels, waste oils or such as esters, poly alpha olefins; etc, and mixtures thereof. The liquid fuels most preferred for practising the present invention are the hydrocarbon fuel oils, most notably biodiesel, bioethanol, diesel, kerosene, and gasoline/petrol.

The present invention concerns a composition that can be added to mixtures of oil and water to allow the formation of translucent emulsions having a water droplet size of 0.1 µm or less, preferably less than 0.01 µm. This small droplet size not only gives the emulsions an appearance which is more aesthetically pleasing to the user than the milky appearance of water-in-oil emulsions comprising water droplets significantly greater than 0.1 µm, but offers several major advantages over such systems. For example, the translucency imparted due to the small droplet size negates the need for both corrosion inhibitors and bactericides. An improvement in the lubricity of the emulsions is also gained, probably due to the liquid emulsifying agents employed to disperse the water in the oil phase. The liquid emulsifying agents are also believed to help to stabilise the translucent emulsion, by which it is meant that the water droplets having a droplet size no greater than 1 µm remain dispersed in the oil phase for a longer period of time e.g. over 12 months, when the emulsion is stored at room temperature, in comparison to the milky emulsion where the water and oil tend to phase separate over long periods of time. These translucent systems are also thermodynamically stable by nature and will therefore not have the inherent instability of typical milky systems.

The droplet size of an emulsion can be measured using standard optical microscopy techniques. These will be obvious to someone skilled in the art.

Compositions suitable for use in the formation of translucent water-in-oil emulsions (i.e. water-in-oil microemulsions) are well known:
WO 98/50139 describes the use of microemulsions in several industrial lubricant applications including cutting oils, hydraulic fluids, gear oils and grinding fluids. The composition for preparing the microemulsion comprises i) a fatty amide ethoxylate ii) C₆-C₁₅ alcohol ethoxylate; and optionally iii) tall oil fatty amide.

US-A-3095286 (Andress et al) discloses the problem of water accumulation in fuel oil storage tanks, resulting from the "breathing" of storage vessels, presenting a problem of rusting. To inhibit sedimentation, screen clogging and rusting in fuel oil compositions during storage it is disclosed to use a compound selected from a phthalamic acid, a tetrahydrophthalamic acid, a hexahydrophthalamic acid and a nadamic acid and their salts of primary amines having between 4 and 30 carbon atoms per molecule as an addition agent to the fuel oil. There is no disclosure of the addition agents forming water-in-oil microemulsions of the fuel oil.

US-A-3346494 (Robbins et al) discloses the preparation of microemulsions employing a selected combination of three microemulsifiers, specifically a fatty acid, an amino alcohol and an alkyl phenol.

FR-A-2373328 (Grangette et al) discloses the preparation of microemulsions of oil and salt water by employing sulphur containing surfactants.

US-A-3876391 (McCoy et al) discloses a process for preparing clear, stable water-in-petroleum microemulsions, which may contain increased quantities of water-soluble additives. The microemulsions are formed by use of both a gasoline-soluble surfactant and a water-soluble surfactant. The only water-soluble surfactants employed in the worked examples are ethoxylated nonylphenols.

US-A-4619967 (Emerson et al) discloses the use of water-in-oil emulsions for emulsion polymerisation processes.

US-A-4770670 (Hazbun et al) discloses stable water-in-fuel microemulsions employing a cosurfactant combination of a phenyl alcohol and an ionic or nonionic surfactant.

US-A-4832868 (Schmid et al) discloses surfactant mixtures useful in the preparation of oil-in-water emulsions. There is no disclosure of any water-in-oil microemulsion comprising at least 60 wt % oil phase.

US-A-5633220 (Cawiezel) discloses the preparation of a water-in-oil emulsion fracturing fluid including an emulsifying agent sold by ICI under the trademark Hypermer (Hypermer emulsifying agents are not disclosed as being C₆-C₁₅ alcohol ethoxylates or mixtures thereof).

Mixtures of C₆-C₁₅ alcohol ethoxylates are commercially available surfactants normally sold for use in the preparation of e.g. washing detergents.

WO-A-9818884 discloses water-in-fuel microemulsions, including examples of such emulsions comprising a C₈ alcohol ethoxylate, with 6 EO groups, mixed with a polyglyceryl-4-monooleate, and mixtures of C₉-C₁₁ alcohol ethoxylates mixed with either polyglyceryl oleates linear alcohols or POE sorbitan alcohols. The presence of the polyglyceryl oleates and POE sorbitan alcohols tend to have detrimental effects on the viscosity properties of the emulsions which, in turn, has a consequential detrimental effect on the lubricity properties of the emulsion.

WO-A-9850139 discloses a water-in-oil microemulsion, including a surfactant mixture comprising a fatty amide ethoxylate, a C₆-C₁₅ alcohol ethoxylate and optionally a tall oil fatty amide. The water-in-oil microemulsion may be an industrial lubricant.

EP-A-1101815 discloses a fuel, particularly for diesel engines, in microemulsion form, comprising a liquid fuel, an emulsifier and an emulsive agent, the emulsive agent having an HLB value higher than 9.

US-A-6716801 discloses a stable, clear water-in-oil microemulsion consisting of from about 5 to 40 wt% aqueous phase and from about 95 to about 60 wt% non-aqueous phase. The microemulsion includes from about 5 to 50 wt% emulsifiers consisting of i) a mixture of C₆-C₁₅ alcohol ethoxylates each comprising from 2 to 12 EO groups, ii) 0 to about 25 wt% polyisobutylenesuccinimide and/or sorbitan ester, and iii) 0 to about 90 wt% amine ethoxylate. The microemulsion is described to be useful as a fuel and/or lubricant/coolant.

WO-A-0053699 discloses a water-in-oil microemulsion, including emulsifying agents comprising a C₆-C₁₅ alcohol ethoxylate, an amine ethoxylate and a polyisobutylenesuccinimide and/or sorbitan ester. The water-in-oil microemulsion may be a fuel.

Water-in-fuel microemulsions are useful and offer potential benefits over traditional fuels in many industrial applications, but when exposed to high or low temperatures the normally translucent microemulsions may undergo a transformation into a conventional milky emulsion, leading to instability. For example, water-in-diesel microemulsions are useful for fueling trucks and offer significant benefits over conventional diesel, but when stored in tanks exposed to extreme temperatures, particularly over long periods of time e.g. as would be experienced during an Alaskan or Siberian winter or an Arabian summer, the microemulsion could become unstable, as observed by loss of their translucent homogeneous appearance, and transform into a milky emulsion which may phase separate over time. It is the object of this invention to provide a water-in-fuel microemulsion which demonstrates improved thermal stability over a broader temperature range than microemulsions of the prior art.

The present invention in its various aspects is as set forth in the accompanying claims.

In a first aspect, the present invention provides a composition suitable for forming a stable, clear water-in-oil emulsion comprising water in an amount of from about 0.1 to about 40 wt %, based on the total weight of the water-in-oil emulsion, and wherein the water in the water-in-oil emulsion exists as droplets having an average droplet size no greater than about 0.1 µm, said composition comprising a mixture of emulsifying agents including a polyisobutylenesuccinimide and a sorbitan ester in a weight ratio of from about 1:8 to about 1:1.

In another aspect, the present invention provides a stable, clear water-in-oil emulsion comprising from about 0.1 to about 40 wt % water, based on the total weight of the water-in-oil emulsion, and emulsifying agents in an amount sufficient to emulsify the water in the oil into droplets having an average droplet size no greater than about 0.1 µm, as determined by microscopy, characterised in that said emulsifying agents comprise a mixture of a polyisobutylenesuccinimide and a sorbitan ester in a weight ratio of from about 1:8 to about 1:1.

In another aspect, the present invention provides the use of a mixture of a polyisobutylenesuccinimide and a sorbitan ester in a weight ratio of from about 1:8 to about 1:1 in a water-in-oil emulsion comprising water in an amount of from about 0.1 to about 40 wt % water, based on the total volume of the water-in-oil emulsion, wherein the polyisobutylenesuccinimide and a sorbitan ester are used in an amount sufficient to emulsify the water in the oil into droplets having an average droplet size no greater than about 0.1 µm, to improve the low and/or high temperature stability of the water-in-oil emulsion.

In another aspect, the present invention provides a method of forming a stable, clear water-in-oil emulsion comprising water in an amount of from about 0.1 to about 40 wt %, based on the total weight of the water-in-oil emulsion, said method comprising the step of contacting a mixture of oil and water with a sufficient amount of the composition of the first aspect of the present invention such that a water-in-oil emulsion is formed wherein the average droplet size of the water phase of the water-in-oil emulsion is no greater than 0.1 µm. Preferably, the amount of composition used is from about 1 to about 10 wt %, preferably about 1 to about 5 wt% based on the total weight of the water-in-oil emulsion.

In another aspect, the present invention provides a method of forming a stable, clear water-in-oil emulsion having improved low and/or high temperature stability comprising water in an amount of from about 0.1 to about 40 wt %, based on the total weight of the water-in-oil emulsion, said method comprising the step of contacting a mixture of oil and water with a sufficient amount of the composition of the first aspect of the present invention such that a water-in-oil emulsion is formed wherein the average droplet size of the water phase of the water-in-oil emulsion is no greater than 0.1 µm. Preferably, the amount of composition used is from about 1 to about 10 wt %, preferably about 1 to about 5 wt% based on the total weight of the water-in-oil emulsion.

The oil may be either an ester type oil, a mineral oil, a synthetic type oil, or a mixture thereof, or it may be a liquid hydrocarbon fuel, such as diesel, aviation fuel, aviation gasoline, unleaded petrol, leaded petrol, kerosene, biofuel, or a mixtures thereof. The oil is preferably a liquid hydrocarbon fuel suitable for fuelling an aircraft, ship or road vehicle.

In each aspect of the present invention, the polyisobutylenesuccinimide is preferably of the formula 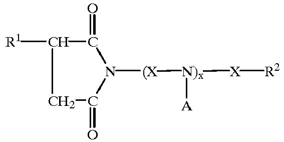 where
R¹ is a hydrocarbyl radical of C₈ to C₈₀₀ chain length, preferably C₈ to C₁₀₀,
X is a divalent alkylene or secondary hydroxyl substituted alkylene radical containing 2 to 3 carbon atoms,
A is hydrogen or an hydroxyacyl radical,
x is the number 1 to 6,
R² is a radical consisting of -NH₂-NHA or a hydroxyl carbyl substituted succinyl radical. More preferably, the polyisobutylene succinimide e.g. Kerrocom is available from BASF.

In each aspect of the present invention, the sorbitan ester is a preferably a sorbitan mono-oleate. More preferably, the sorbitan ester is derived from a polyethoxylated sorbitan and oleic acid, such as polyoxyethylene (20) sorbitan monooleate e.g. Tween 80 available from ICI Americas.

In each aspect of the present invention, the weight ratio of polyisobutylenesuccinimide to sorbitan ester is preferably in the range of from about 1:3 to about 1:6.

The composition of the first aspect of the present invention is a mixture of emulsifying agents, comprising the polyisobutylenesuccinimide to sorbitan ester in a weight ratio of from about 1:8 to about 1:1 and other optional emulsifying agents, which may optionally comprise one or more other ingredients selected from cetane improvers, aliphatic alcohols, antifoam agents, freezing point depressants, such as glycols, and mixtures thereof. The composition is a liquid at room temperature and can be readily dispersed in the water and oil, typically with gentle mixing at room temperature, to form the water-in-oil microemulsion. The person skilled in the art will appreciate that the amount of composition required to form a microemulsion will depend upon the amount of water to be dispersed, but the weight ratio of water to composition will usually be in the range of from about 1:0.25 to about1:1.5, typically about 1:1.

Preferably, the composition of the first aspect of the present invention comprises:
a. about 20 to about 30 wt%, based on the weight of the composition, of a mixture of a polyisobutylenesuccinimide and a sorbitan ester in a weight ratio of from about 1:8 to about 1:1, and
b. about 40 to about 75 wt%, based on the weight of the composition, at least one C₆ - C₁₅ alcohol ethoxylate comprising from 2 to 12 EO groups or a mixture of such alcohol ethoxylates, preferably a mixture of such alcohol ethoxylates. Preferably, the alcohol ethoxylate is a C₁₂-C₁₄ alcohol ethoxylate e.g. Lauropal 2 available from Witco, England.

The composition optionally comprises one or more additional ingredients selected from emulsifying agents other than a. and b. above, cetane improvers, aliphatic alcohols, antifoam agents, freezing point depressants, such as glycols, and mixtures thereof.

For example, the composition may also comprise one or more additional emulsifying agents, e.g. a (C₆-C₂₄) alkyl amine oxide e.g. Chemoxide CAW available from Lubrizol, and / or a fatty (C₆-C₂₄) amide ethoxylate e.g. Colamine OA-100 available from Colonial Chemical Inc.

Any reference in the present specification to "a water-in-oil emulsion, wherein the average droplet size of the water phase of the water-in-oil emulsion is no greater than 0.1 µm "is analogous to the term" a water-in-oil emulsion wherein the emulsion is a clear translucent emulsion".

The present emulsions generally have high lubricity and improved cooling properties without the problems of corrosion or bacterial growth, but all have surprisingly improved stability at high and/or low temperatures. Whilst giving these benefits the emulsions of this invention exhibit none of the disadvantages associated with conventional soluble or invert fluids i.e. bacterial growth, corrosion, reduced sump life etc.

The present invention provides a composition for preparing a stable emulsion. The emulsion is of a continuous oil or fuel phase in which water droplets having an average droplet size of no greater than 0.1 µm are dispersed. The resultant clear translucent emulsion is thermodynamically stable at both high and low temperatures and may offer high lubricity and cooling properties.

Water and oil are generally immiscible and when combined usually separate out to form two distinct phases. The mixture of emulsifying agents used in the present invention is capable of distributing water in the liquid fuel or oil to provide a clear water-in-oil microemulsion, which is stable at lower and higher temperatures than in the prior art.

The term "high and low temperature stability" implies that the fluid has undergone testing over a three week thermal cycle from -20°C to + 40°C and a 48hour test at 60°C. The fluid is considered stable when it remains clear and bright when allowed to return to ambient temperature with no separation or sedimentation at the end of the tests.

The water used can be taken directly from the local water supply.

The composition may comprise additional components. These additional components may be incorporated to improve anti-wear or extreme pressure properties or improve cetane number or act as antifreeze, for example, ethylene glycol. The composition may also comprise the use of aliphatic alcohols. The requirement to add additional components may be dictated by the application area in which the invention is used. Suitable additional components and their requirement will therefore be dependent on application area, as will be apparent to those skilled in the art.

Other than in the operating examples, or where otherwise indicated, all numbers expressing quantities of ingredients used herein are to be understood as modified in all instances by the term "about".

The optional other emulsifying agents may be chosen from a wide range of emulsifying agents known in the art to be useful in the formation of microemulsions. These emulsifying agents are typically liquid at room temperature. Examples of such emulsifying agents include phenol alkoxylates, poly (oxyalkylene) glycols, poly (oxyalkylene) fatty acid esters, amine alkoxylates, fatty acid salts, fatty amine alkoxylates, poly (oxyalkylene) glycol esters, fatty acid amides, fatty acid amide alkoxylates, fatty amines, quaternary amines, alkyloxazolines, alkenyloxazolines, imidazolines, alkyl-sulphonates, alkylarylsulphonates, betaines, alkylsulfosuccinates, alkyl phosphates, alkenylphosphates, phosphate esters, derivatives and mixtures thereof. More preferable emulsifying agents include poly (oxyalkylene) glycols, amine alkoxylates, and fatty amine alkoxylates and mixtures thereof.

Where a compound is referred to as being "ethoxylated", we mean it includes at least 2 EO groups. Preferably ethoxylated compounds comprise from 2 to 12 EO groups. For example, suitable alcohol ethoxylated compounds include those with 2 to 5 EO groups.

When a mixture of C₆-C₁₅ alcohol ethoxylates is employed in the microemulsion, it is preferably a mixture of C₉-C₁₄ alcohol ethoxylates, such as a mixture of C₉ to C₁₁ alcohol ethoxylates or a mixture of C₁₂-C₁₄ alcohol ethoxylates. The distribution of any of the components in the mixture can range from 0 to 50% by weight, and are preferably distributed in a Gaussian format. Commercially available C₆-C₁₅ alcohol ethoxylates include relevant products sold under the trademarks Lutensol (available from BASF, England), Wickenol (available from Witco, England), Neodol (available from Surfachem, England), Dobanol (available from Shell, England), and Synperonic (available from ICI, England), although some of the products may not be exclusively from these ranges. An example of a commercial C₁₂ - C₁₄ alcohol ethoxylate is Lauropal 2 (available from Witco, England).

In one embodiment, the mixture of emulsifying agents comprises the following: (i) 30 parts by wt a mixture of polyisobutylenesuccinimide and sorbitan monooleate; and (ii) 70 parts by wt C₉ - C₁₁ alcohol ethoxylate.

In another embodiment, the mixture of emulsifying agents comprises the following: (i) 30 part by wt a mixture of polyisobutylenesuccinimide and sorbitan monooleate; (ii) 65 parts by wt C₉ - C₁₁ alcohol ethoxylate; and (iii) 5 parts by wt C₁₀ alkyl amine oxide.

In another embodiment, the mixture of emulsifying agents comprises the following: (i) 25 parts by wt a mixture of polyisobutylenesuccinimide and sorbitan monooleate; (ii) 55 parts by wt C₆ - C₁₅ alcohol ethoxylate; (iii) 10 parts by wt C₁₀ alkyl amine oxide and iv) 10 parts nonionic fatty (C₆-C₂₄)amide ethoxylates comprising from about 2 to 20 EO groups.

The emulsifying agents employed in the present invention are liquids at room temperature.

In one embodiment of the present invention, a microemulsion is prepared by mixing:
(a) about 5 to 40 parts, e.g.10 parts, water;
(b) about 95 to 60 parts, e.g. 75 parts, oil, e.g. a lubricant base oil; and
(c) about 1 to about 50 parts, e.g. 15 parts, emulsifying agents, wherein the emulsifying agents include i) a mixture of polyisobutylenesuccinimide and sorbitan ester, ii) a C₆ - C₁₅ alcohol ethoxylate comprising from 2 to 12 EO groups or a mixture of such alcohol ethoxylates, preferably the mixture, and optionally iii) a (C₆-C₂₄)alkyl amine oxide, and optionally iv) a nonionic fatty (C₆-C₂₄)amide ethoxylate comprising from about 2 to 20 EO groups, wherein all parts are by volume.

In another particular embodiment, the microemulsion is prepared by mixing: (i) 8 parts water; (ii) 75 parts base oil; and (iii) emulsifying agents as defined above, in amount of 17 parts by volume relative to the total oil and water.

In a further particular embodiment, the microemulsion is prepared by mixing: (i) 9 parts water; (ii) 75 parts base oil; and (iii) emulsifying agents as defined above, in amount of 16 parts by volume relative to the total oil and water.

The present invention may be utilised in, among others, the industrial lubricants applications and is suited to all uses within that application area.

In one embodiment of the present invention, a microemulsion is prepared by mixing:
(a) about 5 to 40 parts, e.g.10 parts, water;
(b) about 95 to 60 parts, e.g. 75 parts, fuel oil, e.g. a diesel fuel oil; and
(c) about 1 to about 50 parts, e.g. 15 parts, emulsifying agents, wherein the emulsifying agents include i) a mixture of polyisobutylenesuccinimide and sorbitan ester, ii) a C₆ - C₁₅ alcohol ethoxylate comprising from 2 to 12 EO groups or a mixture of such alcohol ethoxylates, preferably the mixture, and optionally iii) a (C₆-C₂₄)alkyl amine oxide, and optionally iv) a fatty (C₆-C₂₄)amide ethoxylate comprising from about 2 to 20 EO groups, wherein all parts are by volume.

In another particular embodiment, the microemulsion is prepared by mixing: (i) 8 parts water; (ii) 75 parts a kerosene type fuel oil; and (iii) emulsifying agents wherein the emulsifying agents include i) a mixture of polyisobutylenesuccinimide and sorbitan ester, ii) a C₆ - C₁₅ alcohol ethoxylate comprising from 2 to 12 EO groups or a mixture of such alcohol ethoxylates, preferably the mixture, and optionally iii) a (C₆-C₂₄)alkyl amine oxide, and optionally iv) a fatty (C₆-C₂₄)amide ethoxylate comprising from about 2 to 20 EO groups, in amount of 17 parts by volume relative to the total oil and water.

In a further particular embodiment, the microemulsion is prepared by mixing: (i) 9 parts water; (ii) 75 parts a fuel oil; and (iii) emulsifying agents wherein the emulsifying agents include i) a mixture of polyisobutylenesuccinimide and sorbitan ester, ii) a C₆ - C₁₅ alcohol ethoxylate comprising from 2 to 12 EO groups or a mixture of such alcohol ethoxylates, preferably the mixture, and optionally iii) a (C₆-C₂₄)alkyl amine oxide, and optionally iv) a fatty (C₆-C₂₄)amide ethoxylate comprising from about 2 to 20 EO groups, in amount of 16 parts by volume relative to the total oil and water.

In a further embodiment, the present invention provides an emulsion comprising (i) 10 parts water; (ii) 90 parts diesel fuel; and (iii) a composition of the first aspect in amount of 15 parts by volume relative to the total fuel and water.

In a further embodiment, the present invention provides an emulsion comprising (i) 10 parts water; (ii) 90 parts unleaded petrol; and (iii) a composition of the first aspect in amount of 13 parts by volume relative to the total fuel and water.

In a further embodiment, the present invention provides an emulsion comprising (i) 10 parts water; (ii) 90 parts diesel fuel; and (iii) a composition of the first aspect in amount of 17 parts by volume relative to the total fuel and water.

The present invention will now be described only by way of example.

### EXAMPLES

As described above, reference to "a water-in-oil emulsion wherein the emulsion is a clear translucent emulsion" is analogous to the term "a water-in-oil emulsion, wherein the average droplet size of the water phase of the water-in-oil emulsion is no greater than 0.1 µm". In the present examples emulsions were visually inspected. Those which were clear and translucent were considered to have an average droplet size of the water phase of the water-in-oil emulsion of no greater than 0.1 µm.

In the following examples, all "parts" are parts by weight, unless stated otherwise.

### Example 1

A composition suitable for combining oil with water was prepared by adding the following components in the quantities stated:
(i) 75 parts C₉ - C₁₁ alcohol ethoxylate (Lauropal 2); and (ii) 25 parts a mixture of polyisobutylenesuccinimide (Kerrocom) and sorbitan monooleate (Tween 80) in a ratio of 1:4.

The components were gently mixed to form an homogenous composition.

### Example 2

A composition suitable for combining oil with water was prepared by adding the following components in the quantities stated:
(i) 5 parts amine oxide (Surfac CPO); (ii) 65 parts C₉ - C₁₁ alcohol ethoxylate (Genapol Z0309X); and (iii) 30 part a mixture of polyisobutylenesuccinimide (Kerrocom) and sorbitan monooleate (Tween 80) in a ratio of 1:4.

The components were gently mixed to form an homogenous composition.

### Example 3

A composition suitable for combining oil with water was prepared by adding the following components in the quantities stated:
(i) 55 parts C₆ - C₁₅ alcohol ethoxylate (Lutensol); (ii) 10 parts fatty amide ethoxylate (Ciba's Albegal B); and (iii) 10 parts amine oxide (Surfac CPO) and (iv) 25 parts a mixture of polyisobutylenesuccinimide (Kerrocom) and sorbitan monooleate (Tween 80) in a ratio of 1:4.

The components were gently mixed to form an homogenous composition.

### Example 4

A composition suitable for combining fuel with water by adding the following components in the quantities stated:
5 parts polyisobutylenesuccinimide (Kerrocom), 24 parts sorbitan mono-oleate (Tween 80), 46 parts C₆ - C₁₅ alcohol ethoxylate (Lutensol), 14 parts ethanol, 11 parts ethylene glycol and 0.1 parts ethylhexyl nitrate.

### Example 5

The compositions prepared in the previous examples were each used to prepare water-in-oil microemulsion fluids by contacting 15 parts by wt composition with a mixture of 10 parts by wt water and 75 parts by wt Diesel. After one minute of gentle mixing clear water-in-oil emulsions were formed.

### Example 6

In order to evaluate the high temperature performance of the fluids prepared in Example 5, the clear microemulsions were heated to 60°C and maintained at that temperature for 48 hours. The fluids were allowed to cool to room temperature after the elevated period and upon reaching ambient temperature were evaluated for any separation or sedimentation. The fluids remained clear and bright with no separation or sedimentation.

### Example 7

In order to evaluate the low temperature performance of the fluids prepared in Example 5, the clear microemulsions were evaluated using Differential Scanning Calorimetery. The fluids were subject to thermal cycling from +40°C to -70°C. The scans were evaluated for any phase changes occurring due to the presence of water. The scans showed no difference in behaviour to the base fuel.

### Example 8

A further thermal cycling test was performed over an extended period ranging from temperatures of -20°C to +40°C whereby the fluids from Example 5 were held at a given temperature starting at -20°C for 24 hours before increasing the temperature by 20°C for subsequent 24 hour periods. This was repeated until the fuel was at +40°C when the temperature was reduced by 20°C intervals for subsequent 24 hour periods until the fuel was at -20°C. This process was repeated over three complete cycles. The fluids were evaluated for separation or sedimentation. The fluids remained clear and bright with no signs of separation or sedimentation.

### Example 9

Fluids were prepared using 3 parts by wt of the composition from example 1 in 97 parts by wt biodiesel that was drawn from the tank bottom of a large storage tank. The samples have been evaluated using the methods IP385, IP472 and E1259. The two IP methods determine the bacterial count of the fuel and its fungal content whilst the latter test determines the persistence of kill of a product. In all cases the neat fuel was found to contain high levels of contamination >10⁵ cfu. With the microemulsions the bacterial and fungal levels were undetectable and the persistence of kill remained at below 10² cfu after 12 weeks.

### Example 10

Fluids were prepared using 15 parts by wt of the composition from Example 1 in 75 parts by wt diesel with 10 parts water. The resulting fluid was a clear bright thermodynamically stable liquid at room temperature (23°C).

### Example 11

The fluid prepared in Example 10 was evaluated for thermal stability properties at both low and high temperatures and compared to those from Example 16 of WO00/536994A1, which used a mixture of polyisobutylene succinimide and sorbitan ester in a ratio of 1:10. The low temperature testing was carried out to ascertain when the fluid took on a milky appearance due to expansion of the water droplets from changes in the solubilisation profiles of the emulsifiers. This occurred at -12.3°C using the composition from Example 10 whereas that from Example 16 of WO00/536994A1 occurred at -6.1°C. This is a significant improvement in thermal stability. Cloud Filter Plug Point test were also carried out with both fluids passing the required -19°C test for diesel fuel. The elevated temperature testing was evaluated to ascertain the point at which the fluid began to show signs of milkiness for similar reasons to the low temperature testing. The fluid temperature was increased until turbidity was detected in the fluid. Using the fluid from Example 10 this was found to be 52.4°C whereas that from Example 16 of WO00/536994A1 was found to become turbid at 46.7°C. Again a significant increase in thermal stability.

### Example 12

A fluid was prepared using the composition from Example 1 at 7 parts and blended with JP-8 aviation gasoline at 88 parts and water at 5 parts and the resulting clear fuel was evaluated for cold temperature performance. The temperature at which this fluid began to exhibit turbidity was determined as -15.7°C. A composition taken from Example 13 of WO00/536994A1 was prepared and found to require 9 parts of surfactant to fully emulsify 5 parts of water in 86 parts JP-8 aviation gasoline. The resulting temperature for turbidity was found to be -12.1°C.

### Example 13

A composition suitable for combining oil with water was prepared by adding the following components in the quantities stated:
(i) 2 parts polyisobutylenesuccinimide (Kerrocom) and
(ii) 14 parts sorbitan monooleate (Tween 80).

The components were gently mixed to form an homogenous composition.

### Example 14

The composition of Example 13 was blended with JP-8 aviation gasoline at 86 parts and water at 6 parts and the resulting clear fuel was evaluated for thermal performance. The fluid was found to exhibit good high and low temperature performance.

Various modifications of the described modes for carrying out the invention which are obvious to those skilled in chemistry or related fields are intended to be within the scope of the following claims.

## Claims

1. A composition comprising a mixture of emulsifying agents comprising a polyisobutylenesuccinimide and a sorbitan ester in a weight ratio of from about 1:8 to about 1:1.

2. A composition as claimed in claim 1, comprising:
a. about 20 to about 30 wt%, based on the total weight of the mixture of emulsifying agents, of a mixture of polyisobutylenesuccinimide and sorbitan ester in a weight ratio of from about 1:8 to about 1:1, and
b. about 40 to about 75 wt%, based on the total weight of the mixture of emulsifying agents, of a C₆ - C₁₅ alcohol ethoxylate comprising from 2 to 12 EO groups or a mixture of such alcohol ethoxylates.

3. A composition as claimed in claim 1 or claim 2, wherein the composition further comprises one or more additional emulsifying agents selected from (C₆-C₂₄) alkyl amine oxides and fatty (C₆-C₂₄)amide ethoxylates.

4. A composition as claimed in any one of the preceding claims, wherein said polyisobutylenesuccinimide is of the formula 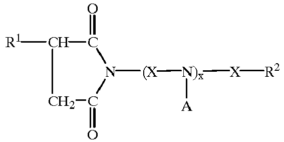 wherein
R¹ is a hydrocarbyl radical of C₈ to C₈₀₀ chain length
X is a divalent alkylene or a secondary hydroxyl substituted alkylene radical containing 2 to 3 carbon atoms
A is hydrogen or an hydroxyacyl radical
x is the number 1 to 6
R² is a radical consisting of -NH₂-NHA or a hydroxyl carbyl substituted succinyl radical.

5. A composition as claimed in any one of the preceding claims, wherein said sorbitan ester is a sorbitan monooleate.

6. A composition as claimed in claim 5, wherein the sorbitan ester is derived from a polyethoxylated sorbitan and oleic acid.

7. A composition as claimed in claim 6, wherein the sorbitan ester is polyoxyethylene (20) sorbitan monooleate.

8. A composition as claimed in any one of the preceding claims, wherein the weight ratio of polyisobutylenesuccinimide to sorbitan ester is in the range of from about 1:3 to about 1:6.

9. A stable, clear water-in-oil emulsion comprising an oil, from about 0.1 to about 40 wt % water, based on the total weight of the water-in-oil emulsion, and a composition as claimed in any one of claims 1 to 8 in an amount sufficient to emulsify the water in the oil into droplets having an average droplet size no greater than about 0.1 µm, as determined by microscopy.

10. A water-in-oil emulsion as claimed in claim 9, wherein the oil is an ester type oil, a mineral oil, a synthetic type oil, a hydrocarbon oil, or a mixture of two or more of said oils.

11. An water-in-oil emulsion as claimed in claim 10, wherein the hydrocarbon oil is a hydrocarbon fuel selected from diesel, aviation fuel, aviation gasoline, unleaded petrol, leaded petrol, kerosene, biofuel and mixtures thereof.

12. A method of forming a stable, clear water-in-oil emulsion having improved low and/or high temperature stability and comprising oil and from about 0.1 to about 40 wt % water, based on the total weight of the water-in-oil emulsion, said method comprising the step of contacting a mixture of said oil and said water with a composition as claimed in any one of claim 1 to 8, wherein said composition is present in an amount sufficient such that a water-in-oil emulsion is formed wherein the average droplet size of the water phase is no greater than 0.1 µm.

13. A method as claimed in claim 12, wherein the amount of said composition used is from about 1 to about 10 wt %, preferably about 1 to about 5 wt%, based on the total weight of the water-in-oil emulsion,.

14. Use of a polyisobutylenesuccinimide and a sorbitan ester in a weight ratio of from about 1:8 to about 1:1 in a water-in-oil emulsion, said water-in-oil emulsion comprising an oil, from about 0.1 to about 40 wt % water, based on the total volume of the water-in-oil emulsion, and a mixture of emulsifying agents, wherein the amount of said mixture of emulsifying agents including said polyisobutylenesuccinimide and said sorbitan ester is sufficient to emulsify the water in the oil into droplets having an average droplet size no greater than about 0.1 µm, to improve the low and/or high temperature stability of the water-in-oil emulsion.

## Patentansprüche

1. Eine Zusammensetzung umfassend eine Mischung von Emulgatoren umfassend ein Polyisobutylensuccinimid und einen Sorbitanester in einem Gewichtsverhältnis von circa 1:8 bis circa 1:1.

2. Eine Zusammensetzung gemäß Anspruch 1, umfassend:
a. circa 20 bis circa 30 Gew.-%, basierend auf dem Gesamtgewicht der Mischung von Emulgatoren, von einer Mischung aus Polyisobutylensuccinimid und Sorbitanester in einem Gewichtsverhältnis von circa 1:8 bis circa 1:1, und
b. circa 40 bis circa 75 Gew.-%, basierend auf dem Gesamtgewicht der Mischung von Emulgatoren, von einem C₆-C₁₅-Alkoholethoxylat umfassend 2 bis 12 EO-Gruppen oder eine Mischung von solchen Alkoholethoxylaten.

3. Eine Zusammensetzung gemäß Anspruch 1 oder Anspruch 2, wobei die Zusammensetzung weiter einen oder mehrere zusätzliche Emulgatoren ausgewählt aus (C₆-C₂₄)-Alkylaminoxiden und Fett-(C₆-C₂₄)-amidethoxylaten umfasst.

4. Eine Zusammensetzung gemäß einem der vorherigen Ansprüche, worin besagtes Polyisobutylensuccinimid die folgende Formel besitzt 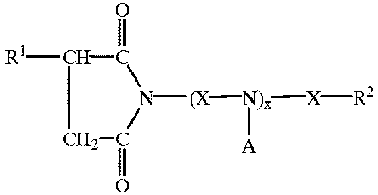 wobei
R¹ ein Kohlenwasserstofifradikal mit einer Kettenlänge von C₈ bis C₈₀₀ ist
X ein divalentes Alkylen- oder ein sekundäres hydroxylsubstituiertes Alkylenradikal ist, das 2 bis 3 Kohlenstoffatome enthält
A Wasserstoff oder ein Hydroxyacylradikal ist
x eine Zahl von 1 bis 6 ist
R² ein Radikal bestehend aus -NH₂-NHA oder ein hydroxykohlenwasserstoffsubstitutiertes Succinylradikal ist.

5. Eine Zusammensetzung gemäß einem der vorherigen Ansprüche, wobei besagter Sorbitanester ein Sorbitanmonooleat ist.

6. Eine Zusammensetzung gemäß Anspruch 5, wobei der Sorbitanester von einem polyethoxyliertem Sorbitan und Ölsäure abgeleitet ist.

7. Eine Zusammensetzung gemäß Anspruch 6, wobei der Sorbitanester Polyoxyethylen(20)-sorbitanmonooleat ist.

8. Eine Zusammensetzung gemäß einem der vorherigen Ansprüche, wobei das Gewichtsverhältnis von Polyisobutylensuccinimid zu Sorbitanester im Bereich von circa 1:3 bis circa 1:6 liegt.

9. Eine stabile, klare Wasser-in-Öl-Emulsion umfassend ein Öl, circa 0,1 bis circa 40 Gew.-% Wasser, basierend auf dem Gesamtgewicht der Wasser-in-Öl-Emulsion, und eine Zusammensetzung gemäß einem der Ansprüche 1 bis 8 in einer Menge, die ausreicht, das Wasser in dem Öl in Tröpfchen mit einer mikroskopisch bestimmten mittleren Tröpfchengröße von nicht größer als circa 0,1 µm zu emulgieren.

10. Eine Wasser-in-Öl-Emulsion gemäß Anspruch 9, wobei das Öl ein Esteröl, ein Mineralöl, ein synthetisches Öl, ein Kohlenwasserstofföl oder eine Mischung aus zwei oder mehr der besagten Öle ist.

11. Eine Wasser-in-Öl-Emulsion gemäß Anspruch 10, wobei das Kohlenwasserstofföl ein Kohlenwasserstoff-Kraftstoff ist, ausgewählt aus Diesel, Flugkraftstoff, Flugbenzin, unverbleites Benzin, verbleites Benzin, Kerosin, Biokraftstoff und Mischungen davon.

12. Ein Verfahren zur Bildung einer stabilen, klaren Wasser-in-Öl-Emulsion mit einer verbesserten Kälte- und/oder Hochtemperaturstabilität, die Öl und circa 0,1 bis circa 40 Gew.-% Wasser, basierend auf dem Gesamtgewicht der Wasser-in-Öl-Emulsion, umfasst, besagtes Verfahren umfassend den Schritt des Inkontaktbringens von besagtem Öl und besagtem Wasser mit einer Zusammensetzung gemäß einem der Ansprüche 1 bis 8, wobei besagte Zusammensetzung in einer Menge vorliegt, die ausreicht, sodass eine Wasser-in-Öl-Emulsion gebildet wird, wobei die mittlere Tröpfchengröße der Wasserphase nicht größer als 0,1 µm ist.

13. Ein Verfahren gemäß Anspruch 12, wobei die verwendete Menge von besagter Zusammensetzung zwischen circa 1 bis circa 10 Gew.-%, bevorzugt zwischen circa 1 bis circa 5 Gew.-%, basierend auf dem Gesamtgewicht der Wasser-in-Öl-Emulsion, liegt.

14. Verwendung eines Polyisobutylensuccinimids und eines Sorbitanesters in einem Gewichtsverhältnis von circa 1:8 bis circa 1:1 in einer Wasser-in-Öl-Emulsion, besagte Wasser-in-Öl-Emulsion umfassend ein Öl, circa 0,1 bis circa 40 Gew.-% Wasser, basierend auf dem Gesamtgewicht der Wasser-in-Öl-Emulsion, und eine Mischung von Emulgatoren, wobei die Menge von besagter Mischung von Emulgatoren einschließlich besagtem Polyisobutylensuccinimid und besagtem Sorbitanester ausreicht, das Wasser in dem Öl in Tröpfchen mit einer mittleren Tröpfchengröße von nicht größer als circa 0,1 µm zu emulgieren, die Kälte- und/oder Hochtemperaturstabilität der Wasser-in-Öl-Emulsion zu verbessern.

## Revendications

1. Composition comprenant un mélange d'agents émulsifiants comprenant un polyisobutylène succinimide et un ester de sorbitane dans un rapport pondéral d'environ 1 : 8 à environ 1 : 1.

2. Composition suivant la revendication 1, comprenant :
a. environ 20 % à environ 30 % en poids sur la base du poids total du mélange d'agents émulsifiants, d'un mélange de polyisobutylène succinimide et d'ester de sorbitane dans un rapport pondéral de 1 : 9 à 1 : 1, et
b. environ 40 % à environ 75 % en poids sur la base du poids total du mélange d'agents émulsifiants, d'un éthoxylat d'alcool en C₆ à C₁₅ comprenant de 2 à 12 groupes d'oxyde d'éthylène ou un mélange de ces éthoxylats.

3. Composition suivant la revendication 1 ou 2, ladite composition comprenant, en outre, un ou plusieurs agents émulsifiants supplémentaires sélectionnés parmi des oxydes d'amine alkyle (C₆-C₂₄) et des éthoxylats d'amide (C₆-C₂₄) gras.

4. Composition suivant une quelconque des revendications précédentes, dans laquelle ledit polyisobutylène succinimide a la formule suivante 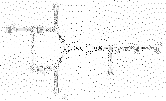 où
R¹ est un radical hydrocarbyle d'une longueur de chaîne de C₈ à C₈₀₀
X est un alkylène divalent ou un radical alkylène à substitution hydroxyle contenant 2 à 3 atomes de carbone
A est unhydrogène ou un radical hydroxyacyle
X est le nombre 1 à 6
R² est un radical constitué de -NH₂-NHA ou un radical succinyle à substitution hydroxyle-carbyle.

5. Composition suivant une quelconque des revendications précédentes, dans laquelle ledit ester de sorbitane est un monooléate de sorbitane.

6. Composition suivant la revendication 5, dans laquelle l'ester de sorbitane est dérivé d'un sorbitane polyéthoxylé et d'acide oléique.

7. Composition suivant la revendication, dans laquelle l'ester de sorbitane est un monooléate de polyoxyéthylène sorbitane.

8. Composition suivant une quelconque des revendications précédentes, dans laquelle le rapport pondéral du polyisobutylène succinimide à l'ester de sorbitane se situe dans la plage d'environ 1 : 3 à environ 1 : 6.

9. Emulsion eau-dans-huile limpide stable comprenant une huile, 0,1 % environ à 40 % environ en poids d'eau sur la base du poids total de l'émulsion eau-dans-huile, et une composition suivant une quelconque des revendications 1 à 8 en quantité suffisante pour émulsifier l'eau dans l'huile, de façon à obtenir des gouttelettes d'une grosseur moyenne n'excédant pas 0,1 µm déterminée par microscopie.

10. Emulsion eau-dans-huile suivant la revendication 9, dans laquelle l'huile est une huile de type ester, une huile minérale, une huile de type synthétique, une huile hydrocarbonée ou un mélange de deux ou de plusieurs desdites huiles.

11. Emulsion eau-dans-huile suivant la revendication 10, dans laquelle l'huile hydrocarbonée est un combustible hydrocarboné sélectionné parmi le diesel, le carburant d'aviation, l'essence d'aviation, l'essence sans plomb, l'essence au plomb, le kérosène, le biocarburant ou un mélange de ceux-ci.

12. Procédé d'obtention d'une émulsion eau-dans-huile limpide, stable présentant une stabilité améliorée aux températures basses et/ou élevées et comprenant de l'huile et 0,1 % environ à 40 % environ en poids d'eau sur la base du poids total de l'émulsion eau-dans-huile, ledit procédé comprenant l'étape qui consiste à mettre en contact un mélange de ladite huile et de ladite eau avec une composition suivant une quelconque des revendications 1 à 8, ladite composition étant présente en quantité suffisante, de sorte qu'une émulsion eau-dans-huile est formée, la grosseur moyenne des gouttelettes de la phase aqueuse n'excédant pas 0,1 µm.

13. Procédé suivant la revendication 12, dans lequel ladite composition est utilisée dans une quantité de 1 % environ à 10 % environ en poids, de préférence de 1 % environ à 5% environ en poids sur la base du poids total de l'émulsion eau-dans-huile.

14. Utilisation d'un polyisobutylène succinimide et d'un ester de sorbitane dans un rapport pondéral de 1 : 8 environ à 1 : 1 environ dans une émulsion eau-dans-huile, ladite émulsion eau-dans-huile comprenant une huile, 0,1 % environ à 40 % environ en poids d'eau sur la base du volume total de l'émulsion eau-dans-huile et un mélange d'agents émulsifiants, la quantité dudit mélange d'agents émulsifiants comportant ledit polyisobutylène succinimide et ledit ester de sorbitane étant suffisante pour émulsifier l'eau dans l'huile, de façon à obtenir des gouttelettes d'une grosseur moyenne n'excédant pas 0,1 µm pour améliorer la stabilité aux températures basses et/ou élevées de l'émulsion eau-dans-huile.
